# EUROPÄISCHE PATENTSCHRIFT

(11) **EP 2 213 495 B1**
(45) Veröffentlichungstag und Bekanntmachung des Hinweises auf die Patenterteilung: **25.05.2011**
(21) Anmeldenummer: 09180781.8
(22) Anmeldetag: 28.12.2009
(51) Int. Cl.: B60K 1/02

(54) **Elektrische Achsanordnung**
Electrical axle assembly
Agencement d'axe électrique

(30) Priorität: 28.01.2009 DE 102009006523
(43) Veröffentlichungstag der Anmeldung: 04.08.2010
(73) Patentinhaber: GETRAG Getriebe- und Zahnradfabrik Hermann Hagenmeyer GmbH & Cie KG, 74199 Untergruppenbach (DE)
(72) Erfinder: Knoblauch, Daniel, 74199, Untergruppenbach (DE)
(74) Vertreter: Witte, Weller & Partner

(56) Entgegenhaltungen:
- WO-A1-2004/016459
- DE-A1- 19 540 067
- US-A- 5 168 946
- SCOTT D: "GERMANY PLUGS IN" POPULAR SCIENCE, TIMES MIRROR MAGAZINES. NEW YORK, US, Bd. 239, Nr. 1, 1. Juli 1991 (1991-07-01), Seiten 37-38, XP000220140 ISSN: 0161-7370

## Beschreibung

Die vorliegende Erfindung betrifft eine elektrische Achsanordnung für ein Kraftfahrzeug, mit einer ersten elektrischen Maschine, die mit einer ersten Eingangswelle drehfest verbunden ist, mit einer zweiten elektrischen Maschine, die mit einer zweiten Eingangswelle drehfest verbunden ist, wobei die erste und die zweite Eingangswelle entlang einer Eingangsachse koaxial angeordnet sind, mit einer ersten Ausgangswelle, die mit einem ersten Antriebsrad verbindbar ist, und mit einer zweiten Ausgangswelle, die mit einem zweiten Antriebsrad verbindbar ist, wobei die erste und die zweite Ausgangswelle entlang einer Ausgangsachse koaxial angeordnet und jeweils über wenigstens eine Getriebestufe mit der zugeordneten Eingangswelle verbunden sind, derart, dass die Antriebsräder von den elektrischen Maschinen unabhängig voneinander antreibbar sind.

Elektrische Achsanordnungen für Kraftfahrzeuge gewinnen in den letzten Jahren zunehmend an Bedeutung. Ein Ansatz besteht darin, eine elektrische Maschine mit einem Verbrennungsmotor zu kombinieren, um Antriebsleistung auf die angetriebenen Räder zu übertragen. Ferner sind auch rein elektrische Antriebe bekannt, die einen Elektromotor und ein Querdifferenzial aufweisen, mittels dessen die elektrische Antriebsleistung auf die zwei Antriebsräder verteilt wird.

Unter dem Begriff des sogenannten " Tandemmotors" sind auch Antriebskonzepte bekannt, bei denen einer angetriebenen Achse eines Fahrzeuges zwei elektrische Maschinen zugeordnet sind, wobei die elektrischen Maschinen die zwei Antriebsräder dieser Achse unabhängig von einander antreiben. Ein mechanisches Differenzial ist hierbei nicht notwendig. Die elektrischen Achsanordnungen dieses Bautyps sind generell in Bezug auf eine Längsachse des Fahrzeugs symmetrisch aufgebaut. Teilweise sind die elektrischen Maschinen in Querrichtung zentral angeordnet und über geeignete Antriebswellen mit den Antriebsrädern verbunden. Derartige Tandemmotoren sind beispielsweise bekannt aus dem gattungsgemässen WO 2004/016459 A1 und dem Dokument Scott D: "GERMANY PLUGS IN", POPULAR SCIENCE, TIMES MIRROR MAGAZINES, NEW YORK, U.S., Band 239, Nr. 1, 1. Juli 1991. In dem letztgenannten Dokument sind zwei elektrische Maschinen koaxial zueinander angeordnet und über jeweilige Zahnriemenantriebe mit den Antriebswellen verbunden. Es sind jedoch auch sogenannte Radnabenmotoren bekannt, bei denen die elektrischen Maschinen in das jeweilige Antriebsrad integriert sind.

Vor dem obigen Hintergrund ist es eine Aufgabe der Erfindung, eine elektrische Achsanordnung für ein Kraftfahrzeug anzugeben, die sich kostengünstig und mit geringen Bauraumabmessungen realisieren lässt.

Diese Aufgabe wird bei der eingangs genannten elektrischen Achsanordnung dadurch gelöst, dass wenigstens eine der Wellen einen Lagerzapfen aufweist, der in einer axialen Lagerbohrung einer hierzu koaxialen Welle radial gelagert ist.

Durch die Maßnahme, zwei koaxiale Wellen nicht unabhängig nebeneinander anzuordnen sondern durch einen Lagerzapfen und eine Lagerbohrung zu einer Wellenanordnung zu verbinden, können erhebliche Bauraumvorteile und Kosteneinsparungen, insbesondere hinsichtlich der Lagerung, erzielt werden.

Durch die Kombination der koaxialen Wellen zu einer Wellenanordnung kann zudem ein Gehäuse der elektrischen Achsanordnung vereinfacht werden.

Unter einer Lagerbohrung ist vorliegend eine axiale Vertiefung in allgemeiner Form zu verstehen, die über die axiale Länge unterschiedliche Durchmesser aufweisen kann.

Die elektrische Achsanordnung kann dabei für eine Achse eines Kraftfahrzeuges verwendet werden, beispielsweise für eine Hinterachse, eine Vorderachse oder für beide Achsen. Zum Antrieb eines Kraftfahrzeuges ist eine einzelne derartige elektrische Achsanordnung hinreichend. Diese Achsanordnung kann jedoch auch mit einer weiteren Antriebseinrichtung an der anderen Fahrzeugachse kombiniert werden, um einen Allrad-Antriebsstrang zu schaffen. Die andere Antriebseinheit kann dabei auch einen herkömmlichen Verbrennungsmotor beinhalten.

Die Aufgabe wird somit vollkommen gelöst.

Gemäß einer bevorzugten Ausführungsform ist der Lagerzapfen durch wenigstens ein Nadellager in der Lagerbohrung gelagert.

Generell kann dieses Lager auch ein beliebiges anderes Lager sein, das für relativ geringe Differenzdrehzahlen zwischen Lagerzapfen-Welle und Lagerbohrungs-Welle ausgelegt ist. Denn diese beiden Wellen drehen sich während der Fahrt des Fahrzeugs generell synchron und Differenzdrehzahlen entstehen im Fahrbetrieb relativ selten, z.B. bei Kurvenfahrten. Demzufolge sind die Relativlagerung zwischen Lagerzapfen-Welle und Lagerbohrungs-Welle keine aufwändigen Lager notwendig.

Bevorzugt wird der Lagerzapfen in der Lagerbohrung durch zwei axial voneinander beabstandete Lager, insbesondere Nadellager gelagert.

Gemäß einer weiteren bevorzugten Ausführungsform weist die Lagerzapfen-Welle einen Schulterabschnitt auf, wobei zwischen dem Schulterabschnitt und der Lagerbohrungs-Welle ein Axiallager angeordnet ist.

Mit anderen Worten stützen sich die Lagerzapfen-Welle und die Lagerbohrungs-Welle in axialer Richtung gegeneinander über ein Axiallager wie ein axiales Nadellager oder Rollenlager ab.

Das Axiallager ist dazu ausgelegt, Axialkräfte zwischen den beiden koaxialen Wellen aufzunehmen. Dabei ist ein einzelnes derartiges Axiallager für die Wellenanordnung hinreichend.

Gemäß einer weiteren bevorzugten Ausführungsform ist die Wellenanordnung aus Lagerzapfen-Welle und Lagerbohrungs-Welle durch zwei Wellenlager an einem Gehäuse gelagert.

Obgleich die zwei Wellen dieser Wellenanordnung generell dazu dienen, unterschiedliche Antriebsräder unabhängig voneinander anzutreiben, bilden diese Wellen durch die Lagerzapfen/Lagerbohrungs-Anordnung eine gemeinsame Wellenanordnung, die mittels nur zwei Wellenlagern an einem Gehäuse lagerbar ist. Es ist demzufolge nicht notwendig, jede einzelne dieser Wellen durch zwei eigene Wellenlager zu lagern. Demzufolge kann die Anzahl der relativ teuren Wellenlager für diese Wellenanordnung gering gehalten werden. Sofern zur Relativlagerung zwischen Lagerzapfen-Welle und Lagerbohrungs-Welle Nadellager verwendet werden, so sind diese relativ kostengünstig, da diese zum einen geringere Lasten übertragen müssen und zum anderen geringere Differenzdrehzahlen.

Die Wellenlager nehmen insbesondere Radialkräfte auf, sowie in der Regel auch Axialkräfte.

Ferner ist es vorteilhaft, wenn die Eingangswellen mit den Ausgangswellen jeweils über einen Radsatz verbunden sind, wobei die Radsätze in Bezug auf eine Längsachse symmetrisch angeordnet sind.

Dabei ist es ebenfalls vorteilhaft, wenn der Lagerzapfen sich in die Lagerbohrung hinein wenigstens bis zu dem Radsatz erstreckt, der an der Lagerbohrungs-Welle angeordnet ist.

Hierdurch wird in Achsrichtung eine große Überdeckung zwischen Lagerzapfen und Lagerbohrung erreicht, so dass die Lagerbohrungs-Welle und die Lagerzapfen-Welle insgesamt wie eine einheitliche Wellenanordnung wirken.

Aus diesem Grund ist es ebenfalls bevorzugt, wenn der Lagerzapfen sich in die Lagerbohrung hinein wenigstens bis zu einem Wellenlager erstreckt, mittels dessen die Lagerbohrungs-Welle an einem Gehäuse gelagert ist.

Hierbei können von dem Lagerzapfen auf die Lagerbohrungs-Welle wirkende Kräfte in diesem Bereich im Wesentlichen unmittelbar in radialer Richtung in das Wellenlager geleitet werden. Dies gilt natürlich umso mehr, wenn das freie Ende des Lagerzapfens innerhalb der Lagerbohrung mittels eines Nadellagers oder eines sonstigen Lagers gelagert ist, das im Wesentlichen radial mit dem äußeren Wellenlager ausgerichtet ist.

Gemäß einer weiteren bevorzugten Ausführungsform ist an den koaxialen Wellen jeweils ein Parksperrenrad festgelegt.

Insbesondere dann, wenn die koaxialen Wellen als gemeinsame Wellenanordnung durch nur zwei Wellenlager an einem Gehäuse gelagert sind, ist in axialer Richtung hinreichend Raum vorhanden, um an den Wellen solche Parksperrenräder vorzusehen. Die Anordnung an den Eingangswellen ermöglicht zudem die günstige Unterbringung einer Parksperrenmechanik.

Dabei ist es von besonderem Vorteil, wenn das Parksperrenrad jeweils zwischen einem Wellenlager, mittels dessen die Eingangswelle an einem Gehäuse gelagert ist, und einem Zahnrad angeordnet ist, das mit der Ausgangswelle verbunden ist.

Diese Ausführungsform bietet sich insbesondere dann an, wenn die Eingangswellen mit den Ausgangswellen jeweils über eine Zwischenwelle verbunden sind.

Zwar ist es generell denkbar, dass die Eingangswellen jeweils nur über eine einzelne Getriebestufe mit den Ausgangswellen verbunden sind.

Von besonderem Vorteil ist es jedoch, wenn die Eingangswellen jeweils über eine erste Getriebestufe mit einer ersten bzw. zweiten Zwischenwelle verbunden sind, die über eine zweite Getriebestufe mit den jeweiligen Ausgangswellen verbunden sind.

Bei dieser Ausführungsform ist es möglich, die notwendige Gesamtübersetzung auf zwei Getriebestufen zu verteilen. Demzufolge können insbesondere die an den Ausgangswellen angeordneten Zahnräder einen relativ geringen Durchmesser aufweisen, so dass in diesem Bereich typischerweise vorhandene Bauraumbeschränkungen eingehalten werden können.

Ferner ist es insgesamt vorteilhaft, wenn die Eingangswellen über wenigstens einen ersten bzw. einen zweiten Radsatz mit der Ausgangswelle verbunden sind, wobei der erste und der zweite Radsatz symmetrisch in Bezug auf eine Längsachse ausgebildet sind, derart, dass sich Axialkräfte aus den Zahneingriffen gegeneinander aufheben.

Unter eine symmetrischen Anordnung der Radsätze ist demzufolge auch zu verstehen, dass die ggf. vorhandenen Schrägverzahnungen der Zahnräder symmetrisch sind, ähnlich wie bei einer Pfeilverzahnung, sich zumindest bei gleicher Drehmomentübertragung auf die zwei Antriebsräder die Axialkräfte aufgrund der Schrägverzahnungseingriffe gegeneinander aufheben.

Ferner ist es insgesamt vorteilhaft, wenn die Achsanordnung ein zweiteiliges Gehäuse aufweist, dessen zwei Gehäuseteile im Wesentlichen symmetrisch in Bezug auf eine Längsachse ausgebildet sind.

Insbesondere dann, wenn die jeweils koaxialen Wellen der elektrischen Achsanordnung jeweils durch eine Lagerzapfen/Lagerbohrung ineinander verschachtelt sind, so dass die so geschaffenen Wellenanordnungen jeweils nur durch zwei Wellenlager an dem Gehäuse gelagert sind, ist eine solche rein zweiteilige Ausbildung möglich. Sofern jede der koaxialen Wellen durch zwei eigene Wellenlager zu lagern wäre, müsste für die nebeneinander liegenden Wellenlager der zwei koaxialen Wellen eine mittlere Gehäuselagerplatte vorgesehen werden, so dass das Gehäuse wenigstens dreiteilig aufgebaut werden müsste.

Ferner ist es insgesamt vorteilhaft, wenn der Lagerzapfen und die Lagerbohrung konisch zulaufend ausgebildet sind.

Hierdurch können die Wellen insbesondere in Axialrichtung belastungsoptimiert ausgeführt werden. Mit anderen Worten kann vermieden werden, dass an bestimmten Stellen durch die Biegelasten Spannungsüberhöhungen auftreten.

Von besonderem Vorteil ist es dabei, wenn der Außendurchmesser des Lagerzapfens im Bereich seines Ursprungs dem Außendurchmesser der Lagerbohrungs-Welle an der Stelle entspricht, wo diese mittels eines Wellenlagers an einem Gehäuse gelagert ist.

Insgesamt kann so eine nicht nur in axialer Richtung sondern auch in radialer Richtung kompakte Wellenanordnung aus Lagerzapfen-Welle und Lagerbohrungs-Welle geschaffen werden.

Gemäß einer weiteren bevorzugten Ausführungsform weist die Lagerbohrung im Bereich des freien Endes des Lagerzapfens eine Ölzuführöffnung auf.

Durch die Ölzuführöffnung kann in den Zwischenraum zwischen der Lagerbohrung und dem Lagerzapfen Öl für das oder die darin befindlichen Lager zugeführt werden, insbesondere die darin angeordneten Nadellager. Sofern die Lagerbohrung und der Lagerzapfen zum freien Ende des Lagerzapfens hin konisch zulaufend ausgebildet sind, können die in dem Zwischenraum wirkenden Zentrifugalkräfte dazu genutzt werden, um sämtliche Lager zur Relativlagerung von Lagerbohrungs-Welle und Lagerzapfen-Welle zu beölen, also nicht nur die als Radiallager dienenden Nagellager, sondern auch ein ggf. vorgesehenes Axiallager zwischen der Lagerbohrungs-Welle und der Lagerzapfen-Welle.

Insgesamt wird durch die elektrische Achsanordnung wenigstens einer der folgenden Vorteile erzielt:
Es ergeben sich kompakte Abmessungen, insbesondere reduzierte Achsabstände und Raddurchmesser. Die elektrische Achsanordnung kann folglich in vielen Anwendungsfällen sowohl an der Vorder- als auch an der Hinterachse eingesetzt werden.

Durch den Entfall eines mittleren Gehäuseteils kann das Gehäuse nur zwei Gehäuseteile aufweisen.

Die Hauptlagerung der Wellen mittels der Wellenlager entspricht vom Aufbau her einem Einfachantrieb. Dadurch ist die Anzahl der (teuren) Wellenlager reduziert.

Die Lager zur Relativlagerung der Lagerzapfen-Welle und der Lagerbohrungs-Welle erfahren nur die Differenzdrehzahlen zwischen den beiden Antrieben (z.B. bei Kurvenfahrt). Dies gilt sowohl für die radialen Lager als auch für das oder die axialen Lager. Diese können demzufolge als relativ einfache Nadellager ausgebildet werden. Insgesamt ergibt sich ein einfacher Aufbau und eine einfache Montage. Zudem ist mehr Bauraum für die Pärksperrenkomponenten verfügbar.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Anordnung eines Kraftfahrzeuges mit einer ersten Ausführungsform einer erfindungsgemäßen elektrischen Achsanordnung;
- Fig. 2: eine Schnittansicht einer weiteren Ausführungsform einer erfindungsgemä- ßen elektrischen Achsanordnung; und
- Fig. 3: eine Schnittansicht einer weiteren Ausführungsform einer erfindungsgemä- ßen elektrischen Achsanordnung.

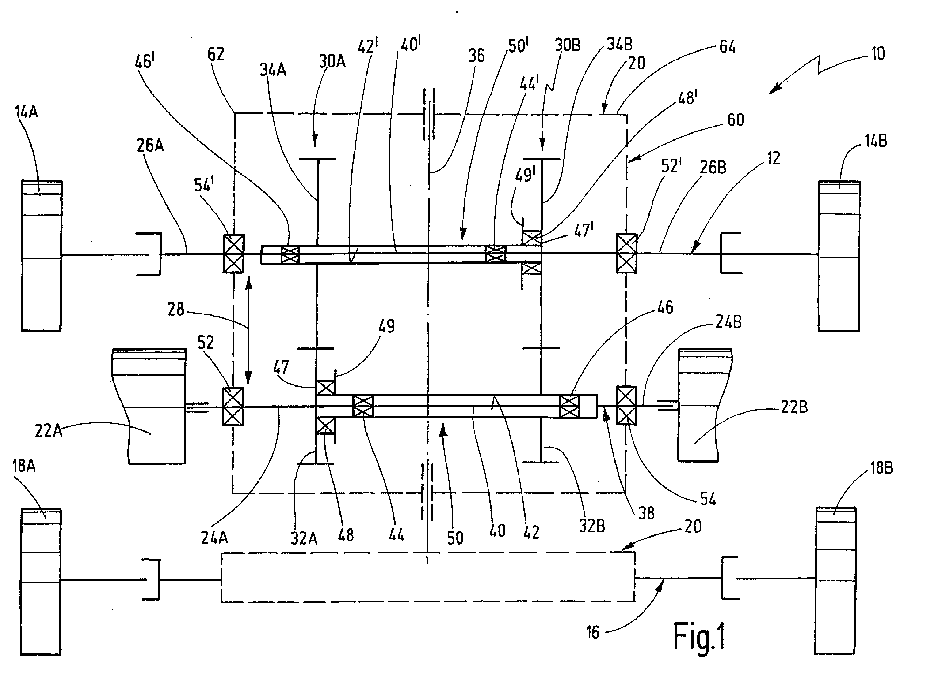

In Fig. 1 ist ein Kraftfahrzeug wie ein Personenkraftwagen in schematischer Form von oben dargestellt und mit 10 bezeichnet. Das Kraftfahrzeug 10 weist eine Vorderachse 12 mit Vorderrädern 14A, 14B sowie eine Hinterachse 16 mit Hinterrädern 18A, 18B auf.

Das Kraftfahrzeug 10 ist im vorliegenden Fall rein elektrisch angetrieben. Dabei ist der Vorderachse 12 eine elektrische Achsanordnung 20 zugeordnet, mittels der die Vorderräder 14A, 14B unabhängig voneinander angetrieben werden können. Die Hinterachse 16 ist im vorliegenden Fall mit einer identischen elektrischen Achsanordnung 20 ausgestattet, was in Fig. 1 lediglich schematisch angedeutet ist. Es versteht sich jedoch, dass alternative Kraftfahrzeuge nur eine einzelne angetriebene Achse aufweisen, so dass die Vorderachse oder die Hinterachse nicht angetrieben ist. Alternativ ist es auch möglich, die elektrische Achsanordnung 20 in Verbindung mit einem Achsantrieb an der anderen Achse zu verwenden, der einen Verbrennungsmotor aufweist.

Die elektrische Achsanordnung 20 weist eine erste elektrische Maschine 22A und eine zweite elektrische Maschine 22B auf, die mit jeweiligen Eingangswellen 24A, 24B der elektrischen Achsanordnung 20 verbunden sind. Die elektrische Achsanordnung 20 weist ferner zwei Ausgangswellen 26A, 26B auf, die mit den Eingangswellen 24A, 24B über eine Getriebestufe 28 verbunden sind. Die Getriebestufe 28 beinhaltet einen ersten Radsatz 30A, der die erste Eingangswelle 24A mit der ersten Ausgangswelle 26A verbindet. Ein zweiter Radsatz 30B verbindet die zweite Eingangswelle 24B mit der zweiten Ausgangswelle 26B. Die Radsätze 30 weisen jeweils ein erstes Rad 32 auf, das an der jeweiligen Eingangswelle 24 festgelegt ist, und ein zweites Rad 34, das an der jeweiligen Ausgangswelle 26 festgelegt ist.

Bei 36 ist eine Längsachse des Kraftfahrzeuges gezeigt. Die elektrische Achsanordnung 20 ist generell symmetrisch in Bezug auf diese Längsachse 36 ausgebildet. Insbesondere sind die elektrischen Maschinen 22 senkrecht zu der Längsachse 36 ausgerichtet und weisen aufeinander zu. Die Eingangswellen 24A, 24B sind konzentrisch zueinander angeordnet und etwa senkrecht zu der Längsachse 36 ausgerichtet. Gleiches gilt für die Ausgangswellen 26A, 26B.

Zur Lagerung der einzelnen Wellen 24A, 24B, 26B, 26B könnten jeweils zwei Wellenlager vorgesehen werden, so dass insgesamt acht Wellenlager bereitzustellen wären, die diese Wellen an einem Gehäuse lagern. Im vorliegenden Fall sind jedoch die zueinander koaxialen Wellen so ineinander verschachtelt, dass sie jeweils gemeinsam mittels nur zweier Wellenlager gelagert werden können.

Zu diesem Zweck weist die erste Eingangswelle 24A einen Lagerzapfen 40 auf, der in einer Lagerbohrung 42 der zweiten Eingangswelle 24B gelagert ist. Die Relativlagerung der zwei Eingangswellen 24A, 24B innerhalb der Lagerbohrung 42 erfolgt dabei bevorzugt über Lager, die keine hohen Differenzdrehzahlen aufnehmen müssen.

Denn bei Geradeausfahrt des Kraftfahrzeuges 10 werden die beiden elektrischen Maschinen 22A, 22B mit der gleichen Drehzahl angetrieben, so dass die Differenzdrehzahl null ist. Eine Drehzahldifferenz ergibt sich im Wesentlichen bei Kurvenfahrten und Ähnlichem. Der Lagerzapfen 40 ist folglich im vorliegenden Fall innerhalb der Lagerbohrung 42 mittels eines ersten Nadellagers 44 und eines zweiten Nadellagers 46 gelagert. Die zwei Nadellager 44, 46 sind als Wellenlager ausgebildet und müssen im Wesentlichen keine Axialkräfte aufnehmen.

Zur Aufnahme von Axialkräften zwischen der ersten Eingangswelle 24A und der zweiten Eingangswelle 24B ist ein Axiallager in Form eines dritten Nadellagers 48 vorgesehen. Dieses Axiallager 48 ist dabei zwischen einem Schulterabschnitt 47 der Lagerzapfen-Wellen 24A und einem Schulterabschnitt 49 der Lagerbohrungs-Welle 24B angeordnet.

Die erste Eingangswelle 24A und die zweite Eingangswelle 24B bilden durch die beschriebene Anordnung eine Wellenanordnung 50, die an ihrem Außenumfang mittels zweier Wellenlager 52, 54 an einem Gehäuse 60 lagerbar ist.

Die Wellenlager 52, 54 sind jeweils weiter von der Längsachse 36 entfernt angeordnet als die jeweils benachbarten Radsätze 30A, 30B.

Das Gehäuse 60 ist im vorliegenden Fall zweiteilig ausgebildet und weist ein erstes Gehäuseteil 62 und ein zweites Gehäuseteil 64 auf. Die zwei Gehäuseteile 62, 64 weisen jeweils einen Flanschabschnitt auf und sind etwa im Bereich der Längsachse miteinander verbunden.

In Fig. 1 ist ferner gezeigt, dass die Ausgangswellen 26A, 26B in gleicher Weise ineinander verschachtelt sind wie die Eingangswellen 24A, 24B. Die entsprechenden Elemente der Ausgangswelle 26A, 26B sind daher mit den gleichen Bezugsziffern 40 bis 54 versehen wie die entsprechenden Elemente an den Eingangswellen 24A, 24B, nur dass die Bezugszeichen an den Ausgangswellen 26A, 26B jeweils mit einem Apostroph versehen sind. Zudem sind an der Ausgangs-Wellenanordnung 50' die Lagerzapfen-Welle 26B und die Lagerbohrungs-Welle 26A von links nach rechts vertauscht. Dies ist jedoch nur eine Option, die Wellenanordnung 50' kann auch identisch aufgebaut sein wie die Wellenanordnung 50 der Eingangswellen 24A, 24B.

Die Lagerzapfen 40, 40' erstrecken sich jeweils in die Lagerbohrung 42, 42' wenigstens soweit hinein, dass der Lagerzapfen radial innerhalb des Zahnrades 32B bzw. 34A der Lagerbohrungs-Welle 24B bzw. 26A liegt. Die von diesen Zahnrädern in die Wellenanordnung 50, 50' eingeleiteten Kräfte können folglich gut abgestützt werden.

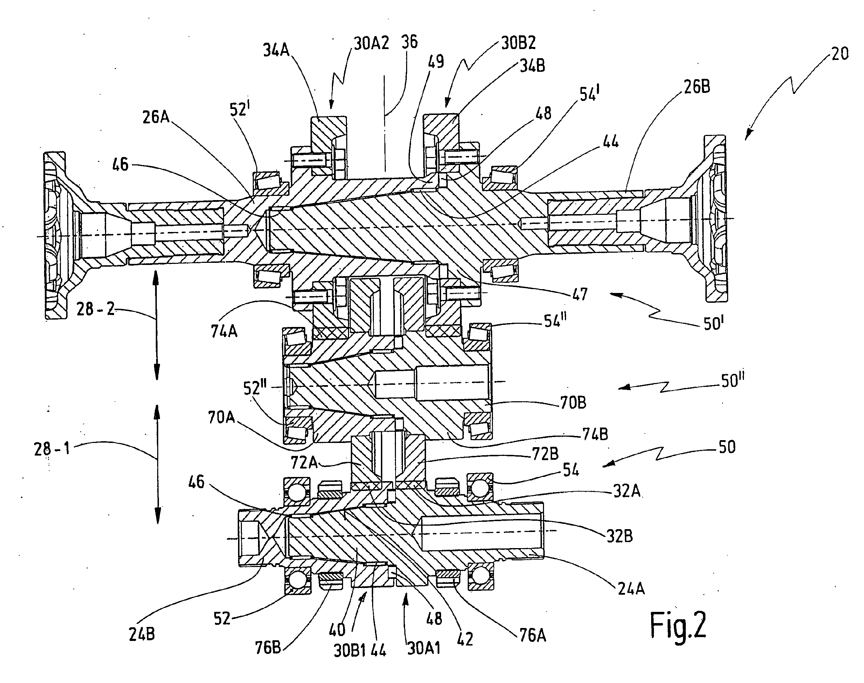

Fig. 2 zeigt eine weitere Ausführungsform einer erfindungsgemäßen elektrischen Achsanordnung 20. Diese entspricht hinsichtlich Aufbau und Funktionsweise generell der Achsanordnung 20 der Fig. 1. Gleiche Elemente sind daher mit gleichen Bezugsziffern versehen. Im Folgenden werden lediglich die Unterschiede erläutert.

Zum einen ist die Achsanordnung 20 der Fig. 2 dadurch gekennzeichnet, dass die Eingangswellen 24A, 24B über eine erste Getriebestufe 28-1 und über eine zweite Getriebestufe 28-2 mit den Ausgangswellen 26A, 26B verbunden sind. Zu diesem Zweck ist zwischen den Eingangswellen 24A, 24B und den Ausgangswellen 26A, 26B ein Paar von Zwischenwellen 70A, 70B vorgesehen. Die erste Zwischenwelle 70A weist dabei ein erstes Zwischenrad 72A auf, das mit einem Rad 32B der zweiten Eingangswelle 24B in Eingriff steht. Die erste Zwischenwelle 70A weist ferner ein zweites Zwischenrad 74A auf, das mit einem Rad 34A der ersten Ausgangswelle 26A in Eingriff steht. In entsprechender Weise weist die zweite Zwischenwelle 70B ein erstes Zwischenrad 72B auf, das mit einem Rad 32A der ersten Eingangswelle 24A in Eingriff steht. Ferner weist die zweite Zwischenwelle 70B ein zweites Zwischenrad 74B auf, das mit einem Rad 34B der zweiten Ausgangswelle 26B in Eingriff steht.

Die ersten Zwischenräder 72A, 72B sind dabei unmittelbar benachbart zur Längsachse 36 angeordnet, wohingegen die zweiten Zwischenräder 74A, 74B beabstandet von der Längsachse 36 angeordnet sind. An der ersten Eingangswelle 24A ist folglich in axialer Ausrichtung mit dem zweiten Zwischenrad 74B axialer Bauraum vorhanden, der zwischen dem Rad 32A und dem zweiten Wellenlager 54 angeordnet ist. In diesem Raum ist bei der Achsanordnung 20 ein erstes Parksperrenrad 76A angeordnet. In entsprechender Weise ist ein zweites Parksperrenrad 76B an der zweiten Eingangswelle 24B angeordnet, und zwar zwischen dem ersten Wellenlager 52 und dem Rad 32B.

Die zwei Zwischenwellen 70A, 70B bilden ebenfalls eine Wellenanordnung 50", die mittels eines ersten Wellenlagers 52" und mittels eines zweiten Wellenlagers 54" an einem Gehäuse (in Fig. 2 nicht dargestellt) gelagert ist.

Ferner weist jede der Wellenanordnungen 50, 50', 50" jeweils einen Lagerzapfen 40 und eine Lagerbohrung 42 auf. Die Lagerzapfen 40 sind dabei jeweils der rechten Welle (bezogen auf die Längsachse 36) zugeordnet, d.h. der Eingangswelle 24A, der zweiten Zwischenwelle 70B und der zweiten Ausgangswelle 26B. In entsprechender Weise sind die Lagerbohrungen in den Wellen 24B, 70A, 26A vorgesehen.

Die Lagerzapfen 40 sind dabei jeweils konisch zulaufend ausgebildet und in konisch zulaufenden Lagerbohrungen 42 gelagert. Die Lagerzapfen 40 und die Lagerbohrungen 42 weisen im Bereich der Lagerung durch die Wellenlager 44, 46 jeweils axial ausgerichtete Abschnitte auf, wie es Fig. 2 zu entnehmen ist.

Die Lagerzapfen 40 erstrecken sich jeweils soweit, dass ein Ende des Lagerzapfens 40 jeweils in radialer Richtung im Bereich des ersten Wellenlagers 52, 52', 52" liegt. Demzufolge können Biegekräfte noch besser aufgenommen werden als bei den Wellenanordnungen 50, 50' der Fig. 1. Die Wellenlager 52', 54' sind in einer X-Anordnung vorgesehen und sind jeweils in axialer Richtung vorgespannt. Gleiches gilt für die Wellenlager 52", 54". Die Lager 52, 54 sind nicht notwendigerweise in X-Anordnung vorgesehen.

Durch die Tatsache, dass die Drehzahlen der elektrischen Maschinen 22A, 22B über zwei Getriebestufen 28-1, 28-2 auf die Ausgangswellen 26A, 26B untersetzt werden, kann der Durchmesser der Räder 34A, 34B an den Ausgangswellen 26A, 26B relativ klein sein, insbesondere verglichen zu einer einstufigen Übersetzungsanordnung wie bei der Ausführungsform der Fig. 1.

Die jeweils konisch ausgebildeten Lagerzapfen 40 sind im Bereich ihres Ursprunges so dick bzw. haben einen solchen Durchmesser, dass dieser etwa dem Außendurchmesser der zugeordneten Lagerbohrungs-Welle und/oder Lagerzapfen-Welle im Bereich des jeweiligen Wellenlagers 52 bzw. 54 entspricht.

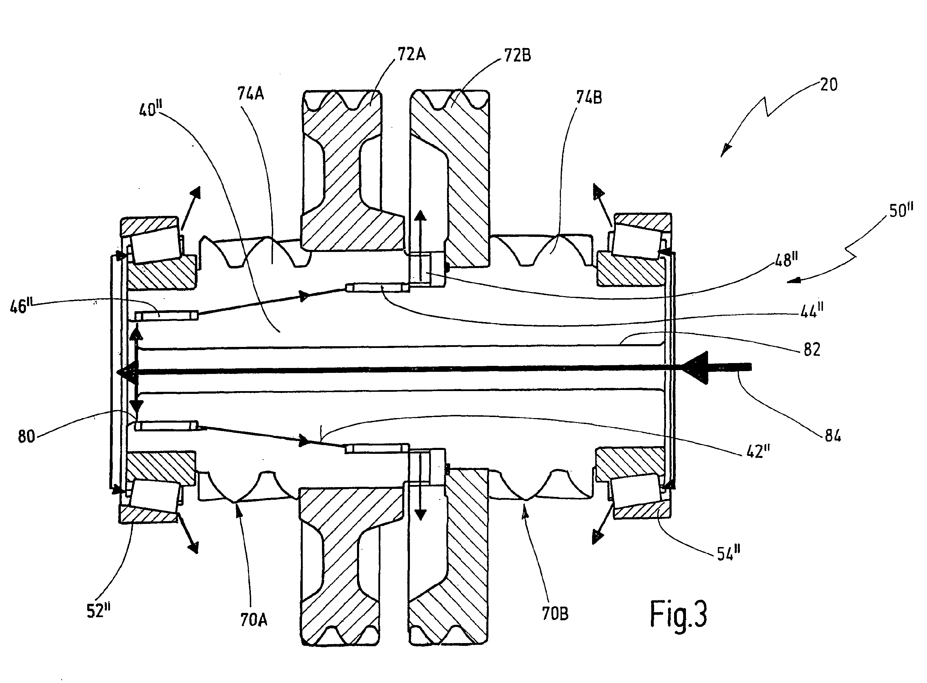

In Fig. 3 ist eine weitere Ausführungsform einer erfindungsgemäßen elektrischen Achsanordnung 20 gezeigt. Genauer gesagt ist in Fig. 3 eine alternative Ausführungsform einer Zwischenwellenanordnung mit einer Lagerbohrungs-Welle 70A und einer Lagerzapfen-Welle 70B dargestellt.

Die Zwischenwellenanordnung entspricht generell der Zwischenwellenanordnung der Fig. 2. Gleiche Elemente sind daher mit gleichen Bezugsziffern versehen. Im Folgenden werden lediglich im Wesentlichen die Unterschiede erläutert.

So ist zu erkennen, dass der Zwischenraum zwischen dem Lagerzapfen 40" und der Lagerbohrung 42" beölt wird, und zwar über eine Ölzuführöffnung 80, die im Bereich des freien Endes des Lagerzapfens 40" vorgesehen ist. Das dort eintretende Schmieröl dient zunächst zur Beölung des Nadellagers 46", das das freie Ende des Lagerzapfens 40" lagert. Aufgrund von Fliehkräften wird das Öl dann radial nach außen gefördert, und zwar hin zu dem anderen Nadellager 44", das den Ursprung des Lagerzapfens 40" lagert. Ferner wird das Öl im Anschluss daran durch das Axiallager 48" hindurchgeführt und beölt folglich auch dieses.

Das hieraus austretende Öl kann dann wieder aufgefangen und einem Tank zugeführt werden.

Bevorzugt wird das Öl dabei über eine Zentralbohrung 82 in der Lagerzapfen-Welle 70B zugeführt, wie es bei 84 gezeigt ist. Das an dem einen axialen Ende der Lagerzapfen-Welle 70B zugeführte Öl kann dabei nicht nur zur Beölung der Lager dienen, die die Lagerzapfen-Welle 70B und die Lagerbohrungs-Welle 70A relativ zueinander lagern. Das zugeführte Öl kann, wie es in Fig. 3 gezeigt ist, auch zur Beölung der Wellenlager 52", 54" dienen. Demzufolge kann ein einfaches Beölungskonzept realisiert werden, bei dem das Öl zentrisch zu einer jeweiligen Wellenanordnung zugeführt wird (z.B. mittels einer Ölpumpe oder Ölauffangrippen). Dabei genügt pro Wellenanordnung eine Ölzufuhr 84 zur Beölung sämtlicher Lager, die zur Lagerung der Wellenanordnung dienen, insbesondere, da durch die Abstufung der Lager die Fliehkraft bzw. Erdanziehungskraft genutzt werden kann.

Obgleich das in Fig. 3 dargestellte Beölungskonzept in Bezug auf eine Zwischenwellenanordnung 50" mit der Lagerzapfen-Welle 70B und der Lagerbohrungs-Welle 70A gezeigt ist, versteht sich, dass das gleiche Beölungskonzept in entsprechender Weise auch für eine weitere oder die weiteren Wellenanordnungen 50, 50' der elektrischen Achsanordnung verwendet werden kann.

## Patentansprüche

1. Elektrische Achsanordnung (20) für ein Kraftfahrzeug (10), mit einer ersten elektrischen Maschine (22A), die mit einer ersten Eingangswelle (24A) drehfest verbunden ist, mit einer zweiten elektrischen Maschine (22B), die mit einer zweiten Eingangswelle (24B) drehfest verbunden ist, wobei die erste und die zweite Eingangswelle (24A, 24B) entlang einer Eingangsachse (38) koaxial angeordnet sind, mit einer ersten Ausgangswelle (26A), die mit einem ersten Antriebsrad (14A) verbindbar ist, und mit einer zweiten Ausgangswelle (26B), die mit einem zweiten Antriebsrad (14B) verbindbar ist, wobei die erste und die zweite Ausgangswelle (26A, 26B) entlang einer Ausgangsachse (12) koaxial angeordnet und jeweils über wenigstens eine Getriebestufe (28) mit der zugeordneten Eingangswelle (24A, 24B) verbunden sind, derart, dass die Antriebsräder (14A, 14B) von den elektrischen Maschinen (22A, 22B) unabhängig voneinander antreibbar sind,
**dadurch gekennzeichnet, dass**
wenigstens eine (24A, 26B, 70B) der Wellen einen Lagerzapfen (40) aufweist, der in einer axialen Lagerbohrung (42) einer hierzu koaxialen Welle (24B, 26A, 70A) radial gelagert ist.

2. Elektrische Achsanordnung nach Anspruch 1, **dadurch gekennzeichnet, dass** der Lagerzapfen (40) durch wenigstens ein Nadellager (44, 46) in der Lagerbohrung (42) gelagert ist.

3. Elektrische Achsanordnung nach Anspruch 1 oder 2, **dadurch gekennzeichnet, dass** die Lagerzapfen-Welle (24A, 26B, 70B) einen Schulterabschnitt (47) aufweist, wobei zwischen dem Schulterabschnitt (49) und der Lagerbohrungs-Welle (24B, 26A, 70B) ein Axiallager (48) angeordnet ist.

4. Elektrische Achsanordnung nach einem der Ansprüche 1-3, **dadurch gekennzeichnet, dass** die Wellenanordnung (50) aus Lagerzapfen-Welle (24A, 26B, 70B) und Lagerbohrungs-Welle (24B, 26A, 70A) durch zwei Wellenlager (52, 54) an einem Gehäuse (60) gelagert ist.

5. Elektrische Achsanordnung nach einem der Ansprüche 1 - 4, **dadurch gekennzeichnet, dass** die Eingangswellen (24A, 24B) mit den Ausgangswellen (26A, 26B) jeweils über einen Radsatz (30A, 30B) verbunden sind, wobei die Radsätze (30A, 30B) in Bezug auf eine Längsachse (36) symmetrisch angeordnet sind.

6. Elektrische Achsanordnung nach Anspruch 5, **dadurch gekennzeichnet, dass** der Lagerzapfen (40) sich in die Lagerbohrung (42) hinein wenigstens bis zu dem Radsatz (30) erstreckt, der an der Lagerbohrungs-Welle (24B, 26A, 70A) angeordnet ist.

7. Elektrische Achsanordnung nach einem der Ansprüche 1-6, **dadurch gekennzeichnet, dass** der Lagerzapfen (40) sich in die Lagerbohrung (42) hinein wenigstens bis zu einem Wellenlager (54) erstreckt, mittels dessen die Lagerbohrungs-Welle (24B, 26A, 70A) an einem Gehäuse (60) gelagert ist.

8. Elektrische Achsanordnung nach einem der Ansprüche 1-7, **dadurch gekennzeichnet, dass** an den Eingangswellen (24A, 24B) jeweils ein Parksperrenrad (76A, 76B) festgelegt ist.

9. Elektrische Achsanordnung nach Anspruch 8, **dadurch gekennzeichnet, dass** das Parksperrenrad (76A, 76B) jeweils zwischen einem Wellenlager (52, 54), mittels dessen die Eingangswelle (24A, 24B) an einem Gehäuse (60) gelagert ist, und einem Zahnrad (32A, 32B) angeordnet ist, das mit der Ausgangswelle (26A, 26B) verbunden ist.

10. Elektrische Achsanordnung nach einem der Ansprüche 1-9, **dadurch gekennzeichnet, dass** die Eingangswellen (24A, 24B) jeweils über eine erste Getriebestufe (28-1) mit einer ersten bzw. zweiten Zwischenwelle (70A, 70B) verbunden sind, die über eine zweite Getriebestufe (28-2) mit den jeweiligen Ausgangswellen (26A, 26B) verbunden sind.

11. Elektrische Achsanordnung nach einem der Ansprüche 1 - 10, **dadurch gekennzeichnet, dass** die Eingangswellen (24A, 24B) über wenigstens einen ersten bzw. einen zweiten Radsatz (30A, 30B) mit den jeweiligen Ausgangswellen (26A, 26B) verbunden sind, wobei der erste und der zweite Radsatz (30A, 30B) symmetrisch in Bezug auf eine Längsachse (36) ausgebildet sind, derart, dass sich Axialkräfte aus den Zahneingriffen gegeneinander aufheben.

12. Elektrische Achsanordnung nach einem der Ansprüche 1-11, **dadurch gekennzeichnet, dass** die Achsanordnung (20) ein zweiteiliges Gehäuse (60) aufweist, dessen zwei Gehäuseteile (62, 64) im Wesentlichen symmetrisch in Bezug auf eine Längsachse (36) ausgebildet sind.

13. Elektrische Achsanordnung nach einem der Ansprüche 1 - 12, **dadurch gekennzeichnet, dass** der Lagerzapfen (40) und die Lagerbohrung (42) konisch zulaufend ausgebildet sind.

14. Elektrische Achsanordnung nach Anspruch 13, **dadurch gekennzeichnet, dass** der Außendurchmesser des Lagerzapfens (40) im Bereich seines Ursprungs dem Außendurchmesser der Lagerbohrungs-Welle (24B, 26A, 70A) und/oder der Lagerzapfen-Welle (24A, 26B, 70B) an der Stelle entspricht, wo diese mittels eines Wellenlagers (52 bzw. 54) an einem Gehäuse (60) gelagert ist.

15. Elektrische Achsanordnung nach einem der Ansprüche 1 bis 14, **dadurch gekennzeichnet, dass** die Lagerbohrung (42) im Bereich des freien Endes des Lagerzapfens (40) eine Ölzuführöffnung (80) aufweist.

## Claims

1. Electrical axle assembly (20) for a motor vehicle (10), comprising a first electric machine (22A), which is rotationally fixed to a first input shaft (24A), a second electric machine (22B), which is rotationally fixed to a second input shaft (24B), the first input shaft (24A) and the second input shaft (24B) being arranged coaxially along an input axle (38), a first output shaft (26A), which can be connected to a first driving wheel (14A), and a second output shaft (26B), which can be connected to a second driving wheel (14B), the first output shaft (26A) and the second output shaft (26B) being arranged coaxially along an output axle (12) and each being connected to the associated input shaft (24A,24B) via at least one transmission stage (28), in such a way that the driving wheels (14A, 14B) can be driven independently of one another by the electric machines (22A, 22B),
**characterized in that**
at least one of the shafts (24A, 26B, 70B) has a bearing journal (40), which is radially supported in an axial bearing bore (42) of a shaft (24B, 26A, 70A) coaxial therewith.

2. Electrical axle assembly according to Claim 1, **characterized in that** the bearing journal (40) is supported in the bearing bore (42) by at least one needle-roller bearing (44, 46).

3. Electrical axle assembly according to Claim 1 or 2, **characterized in that** the bearing journal-shaft (24A, 26B, 70B) has a shoulder section (47), an axial bearing (48) being arranged between the shoulder section (49) and the bearing-bore shaft (24B, 26A, 70B).

4. Electrical axle assembly according to one of Claims 1-3, **characterized in that** the shaft arrangement (50) comprising the bearing journal-shaft (24A, 26B, 70B) and the bearing bore-shaft (24B, 26A, 70A) is supported on a housing (60) by two shaft bearings (52, 54).

5. Electrical axle assembly according to one of Claims 1-4, **characterized in that** the input shafts (24A, 24B) are each connected to the output shafts (26A, 26B) via a gear set (30A, 30B), the gear sets (30A, 30B) being arranged symmetrically about a longitudinal axis (36).

6. Electrical axle assembly according to Claim 5, **characterized in that** the bearing journal (40) extends into the bearing bore (42) at least up to the gear set (30), which is located on the bearing bore-shaft (24B, 26A, 70A).

7. Electrical axle assembly according to one of Claims 1-6, **characterized in that** the bearing journal (40) extends into the bearing bore (42) at least up to a shaft bearing (54), which serves to support the bearing bore-shaft (24B, 26A, 70A) on a housing (60).

8. Electrical axle assembly according to one of Claims 1-7, **characterized in that** a parking position gear (76A, 76B) is fixed to each of the input shafts (24A, 24B).

9. Electrical axle assembly according to Claim 8, **characterized in that** the parking position gear (76A, 76B) is in each case arranged between a shaft bearing (52, 54), which serves to support the input shaft (24A, 24B) on a housing (60), and a gear wheel (32A, 32B), which is connected to the output shaft (26A, 26B).

10. Electrical axle assembly according to one of Claims 1-9, **characterized in that** the input shafts (24A, 24B) are in each case connected via a first transmission stage (28-1) to a respective one of a first and a second intermediate shaft (70A, 70B), these shafts in each case being connected to the respective output shaft (26A, 26B) via a second transmission stage (28-2).

11. Electrical axle assembly according to one of Claims 1-10, **characterized in that** the input shafts (24A, 24B) are connected to the respective output shafts (26A, 26B) via at least a respective one of a first and a second gear set (30A, 30B), the first gear set (30A) and the second gear set (30B) being of symmetrical design about a longitudinal axis (36), in such a way that axial forces resulting from the tooth engagements cancel each other out.

12. Electrical axle assembly according to one of Claims 1-11, **characterized in that** the axle assembly (20) has a two-part housing (60), the two housing parts (62, 64) of which are substantially symmetrical about a longitudinal axis (36).

13. Electrical axle assembly according to one of Claims 1-12, **characterized in that** the bearing journal (40) and the bearing bore (42) are of a conically tapering design.

14. Electrical axle assembly according to Claim 13, **characterized in that** the outside diameter of the bearing journal (40) in the area of its point of origin is equal to the outside diameter of the bearing bore-shaft (24B, 26A, 70A) and/or the bearing journal-shaft (24A, 26B, 70B) at the point where this is supported on a housing (60) by means of a shaft bearing (52 or 54).

15. Electrical axle assembly according to one of Claims 1 to 14, **characterized in that** the bearing bore (42) has an oil feed aperture (80) in the area of the free end of the bearing journal (40).

## Revendications

1. Agencement d'axe électrique (20) pour un véhicule automobile (10), avec un premier moteur électrique (22A) qui est relié fixement sans rotation à un premier arbre d'entrée (24A), avec un deuxième moteur électrique (22B) qui est relié fixement sans rotation à un deuxième arbre d'entrée (24B), le premier et le deuxième arbre d'entrée (24A, 24B) étant disposés, d'un point de vue coaxial, le long d'un axe d'entrée (38), avec un premier arbre de sortie (26A) qui peut être relié à une première roue d'entraînement (14A) et avec un deuxième arbre de sortie (26B) qui peut être relié à une deuxième roue d'entraînement (14B), le premier et le deuxième arbre de sortie (26A, 26B) étant disposés, d'un point de vue coaxial, le long d'un axe de sortie (12) et étant reliés respectivement à l'arbre d'entrée (24A, 24B) associé par l'intermédiaire d'au moins un rapport d'engrenage (28), de telle sorte que les roues d'entraînement (14A, 14B) peuvent être entraînées indépendamment les unes des autres par les moteurs électriques (22A, 22B), **caractérisé en ce qu'**au moins un (24A, 26B, 70B) des arbres comporte un tourillon (40) disposé, d'un point de vue radial, dans un alésage de roulement (42) axial d'un arbre (24B, 26A, 70A) disposé coaxialement par rapport à lui.

2. Agencement d'axe électrique selon la revendication 1, **caractérisé en ce que** le tourillon (40) est disposé dans l'alésage de roulement (42) à l'aide d'au moins un roulement à aiguille (44, 46).

3. Agencement d'axe électrique selon la revendication 1 ou 2, **caractérisé en ce que** l'arbre de tourillon (24A, 26B, 70B) comporte un segment d'épaulement (47), un roulement axial (48) étant disposé entre le segment d'épaulement (49) et l'arbre d'alésage de roulement (24B, 26A, 70B).

4. Agencement d'axe électrique selon l'une quelconque des revendications 1 à 3, **caractérisé en ce que** l'agencement d'arbres (50) composé de l'arbre de tourillon (24A, 26B, 70B) et de l'arbre d'alésage de roulement (24B, 26A, 70A) est disposé au niveau d'un boîtier (60) à l'aide de deux roulements d'arbre (52, 54).

5. Agencement d'axe électrique selon l'une quelconque des revendications 1 à 4, **caractérisé en ce que** les arbres d'entrée (24A, 24B) sont reliés aux arbres de sortie (26A, 26B) respectivement via un essieu (30A, 30B), les essieux (30A, 30B) étant disposés de façon symétrique par rapport à un axe longitudinal (36).

6. Agencement d'axe électrique selon la revendication 5, **caractérisé en ce que** le tourillon (40) s'étend dans l'alésage de roulement (42) au moins jusqu'à l'essieu (30) disposé au niveau de l'arbre d'alésage de roulement (24B, 26A, 70A).

7. Agencement d'axe électrique selon l'une quelconque des revendications 1 à 6, **caractérisé en ce que** le tourillon (40) s'étend dans l'alésage de roulement (42) au moins jusqu'à un roulement d'arbre (54) à l'aide duquel l'arbre d'alésage de roulement (24B, 26A, 70A) est disposé au niveau d'un boîtier (60).

8. Agencement d'axe électrique selon l'une quelconque des revendications 1 à 7, **caractérisé en ce qu'**une roue d'arrêt de stationnement (76A, 76B) est respectivement fixée aux arbres d'entrée (24A, 24B).

9. Agencement d'axe électrique selon la revendication 8, **caractérisé en ce que** la roue d'arrêt de stationnement (76A, 76B) est respectivement disposée entre un roulement d'arbre (52, 54) à l'aide duquel l'arbre d'entrée (24A, 24B) est disposé au niveau d'un boîtier (60) et une roue dentée (32A, 32B) reliée à l'arbre de sortie (26A, 26B).

10. Agencement d'axe électrique selon l'une quelconque des revendications 1 à 9, **caractérisé en ce que** les arbres d'entrée (24A, 24B) sont respectivement reliés, par l'intermédiaire d'un premier rapport d'engrenage (28-1), à un premier et/ou à un deuxième arbre intermédiaire (70A, 70B) reliés aux arbres de sortie (26A, 26B) respectifs par l'intermédiaire d'un deuxième rapport d'engrenage (28-2).

11. Agencement d'axe électrique selon l'une quelconque des revendications 1 à 10, **caractérisé en ce que** les arbres d'entrée (24A, 24B) sont reliés, par l'intermédiaire d'au moins un premier et/ou un deuxième essieu (30A, 30B), aux arbres de sortie (26A, 26B) respectifs, le premier et le deuxième essieu (30A, 30B) étant réalisés de façon symétrique par rapport à un axe longitudinal (36), de telle sorte que les forces axiales s'exercent de façon opposée au sortir des engrènements dentés.

12. Agencement d'axe électrique selon l'une quelconque des revendications 1 à 11, **caractérisé en ce que** l'agencement d'axe (20) comporte un boîtier (60) en deux parties dont les deux parties de boîtier (62, 64) sont réalisées pour l'essentiel de façon symétrique par rapport à un axe longitudinal (36).

13. Agencement d'axe électrique selon l'une quelconque des revendications 1 à 12, **caractérisé en ce que** le tourillon (40) et l'alésage de roulement (42) sont réalisés de façon à présenter un effilement conique.

14. Agencement d'axe électrique selon la revendication 13, **caractérisé en ce que** le diamètre extérieur du tourillon (40) coïncide, dans la zone de son commencement, avec le diamètre extérieur de l'arbre d'alésage de roulement (24B, 26A, 70A) et/ou de l'arbre de tourillon (24A, 26B, 70B) à l'endroit où celui-ci est disposé au niveau d'un boîtier (60) à l'aide d'un roulement d'arbre (52 et/ou 54).

15. Agencement d'axe électrique selon l'une quelconque des revendications 1 à 14, **caractérisé en ce que** l'alésage de roulement (42) comporte, dans la zone de l'extrémité libre du tourillon (40), une ouverture d'amenée d'huile (80).
